**Europäisches Patentamt**

**European Patent Office**

**Office européen des brevets**

(19)

(11) Publication number : **0 505 336 A1**

(12) **EUROPEAN PATENT APPLICATION**

(21) Application number : **92830134.0**

(22) Date of filing : **19.03.92**

(51) Int. Cl.⁵ : **B60R 16/02**

Number of italian priority: MI91A000780.

(30) Priority : **22.03.91**

(43) Date of publication of application :
**23.09.92 Bulletin 92/39**

(84) Designated Contracting States :
**DE ES FR GB PT**

(71) Applicant : **Codrino, Giuseppe**
**Via Stazione, 2**
**I-15028 Quattordio (Alessandria) (IT)**

(72) Inventor : **Codrino, Giuseppe**
**Via Stazione, 2**
**I-15028 Quattordio (Alessandria) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Control central unit for controlling and storing the positions of a seat, steering wheel and rear-vision-mirrors in a motor vehicle.**

(57) A control central unit for motor vehicles comprises a microprocessor (2) having a permanent store capability, with the microprocessor being interfaced : an analogic feed-back buffer for the seat (3), an analogic feed -back buffer for the rear vision mirrors (4) and a buffer for the contacts of the keyboard (5) for driving the rear vision mirrors, a buffer for the contacts of the memory keyboard (6), a rear vision mirror motor driver (7), a logic circtuitry (8) for either automatically or manually controlling the electric motors of the seat and steering wheel, as well as a remote control interface (9), and a digital buffer (10) for the status signals.

FIG. 1

EP 0 505 336 A1

## BACKGROUND OF THE INVENTION

The present invention relates to a control central unit for controlling and storing the positions of a seat, steering wheel and rear vision mirrors in a motor vehicle.

As is known, at present all of the car making industries supply motor vehicles in which the positions of one or more seats and of the rear vision mirrors can be adjusted so as to fit the requirements of the driver and/or passengers.

Also known is the fact that the adjustment operations can be conventionally carried out by means of merely mechanic actuators, or electromechanical actuators, depending on the cost of the motor vehicle.

## SUMMARY OF THE INVENTION

The main object of the present invention is to provide a central control unit for controlling a plurality of electromechanical actuators for performing the above mentioned adjusting operations, which central control unit is specific ally designed to store a set number of adjustments related to the most appropriate positions of the seat, steering wheel and rear vision mirrors of the motor vehicle.

Within the scope of the above mentioned aim, a main object of the present invention is to provide such a control central unit which is also designed for providing the driver with a precious aid during the turning and parking operations of the motor vehicle.

Another object of the present invention is to provide such a control central unit which is also designed for automatically collapsing the outer rear vision mirrors of the motor vehicle as the motor vehicle is engaged in a parking step.

According to one aspect of the present invention, the above mentioned aim and objects, as well as yet other objects, which will become more apparent hereinafter, are achieved by a control central unit for controlling and storing the positions of a seat, steering wheel and rear vision mirrors in a motor vehicle, characterized in that said unit comprises a control microprocessor having a permanent storing capability, said microprocessor being interfaced with: an analogic feedback buffer for the seat, an analogic feedback buffer for the rear vision mirrors, a buffer for contact means of keyboard control means of said rear vision mirrors, a buffer for contact means of memory keyboard means, a driver for driving electric motor means of said rear vision mirrors, a logic circuitry for driving, either automatically or manually, electric motor means for the seat and steering wheel, as well as a remote control interface, and a digital buffer for status signals.

## BRIEF DESCRIPTION OF THE DRAWINGS

Further characteristics and advantages of the control central unit for controlling and storing the positions of a seat, steering wheel and rear vision mirrors in a motor vehicle according to the present invention, will become more apparent hereinafter from the following detailed disclosure of a preferred, though not exclusive, embodiment thereof which is illustrated, by way of a merely indicative, but not limitative, example in the accompanying drawings, where:

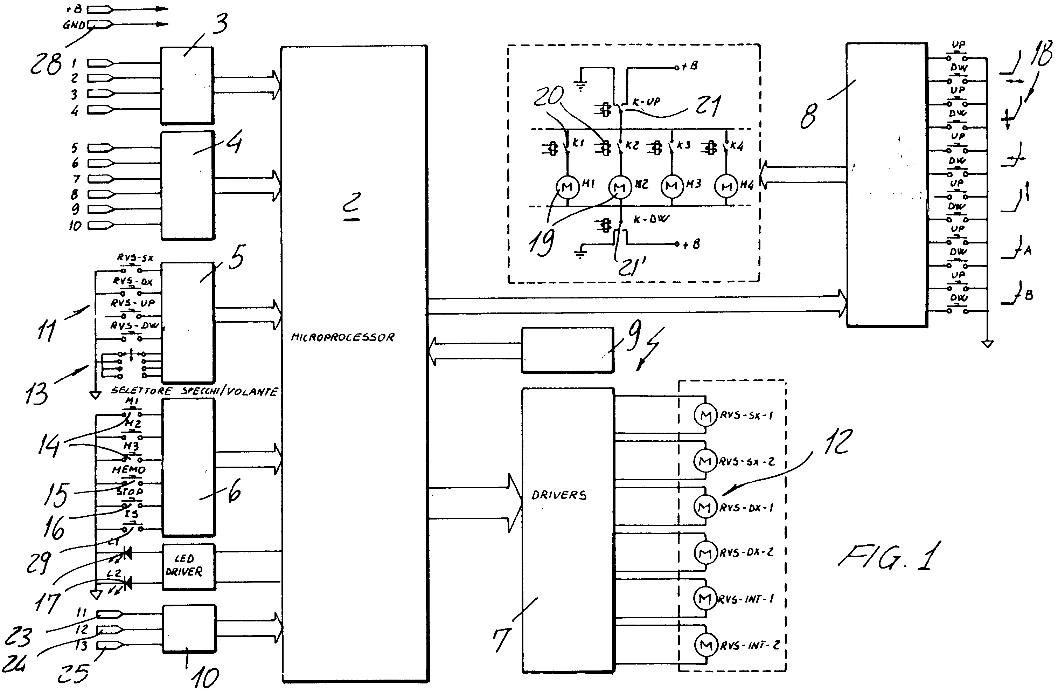

Figure 1 is a schematic block diagram of the control central unit according to the present invention; and

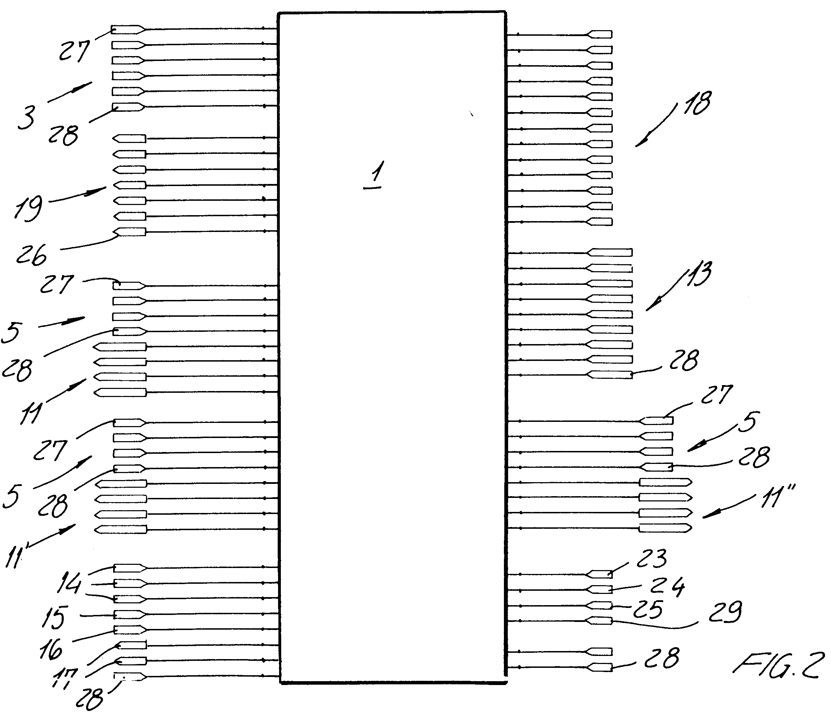

Figure 2 illustrates a possible wiring diagram for electrically connecting the central control unit according to the present invention to the electric system of the motor vehicle.

## DESCRIPTION OF THE PREFERRED EMBODIMENT

With reference to the figures of the accompanying drawings, the control central unit according to the present invention which has been generally indicated at the reference number 1, comprises a central processing or control module 2, which consists of a microprocessor having a permanent storing capability.

With this microprocessor there are respectively interfaced a feedback analogic buffer 3 for at least a seat of the motor vehicle, an analog feedback buffer 4 for the rear vision mirrors, a buffer 5 for the contacts of a keyboard for controlling the rear vision mirrors, a buffer 6 for the contacts of a memory keyboard, a driver 7 for driving electric motors of the rear vision mirrors, a logic circuitry 8 for driving or controlling, either automatically or manually, electric motor means for the seat and steering wheel, as well as a remote control interface 9, and a digital buffer 10 for the status signals.

In operation, as the central control unit enable the manual positioning of the actuators of the seat/mirrors, the above mentioned control logic circuitry 8 will read out the control push-buttons and will suitably drive the related devices for controlling their electric motors.

By means of the push-buttons assemblies 11, 11' and 11'', to the microprocessor there are sent the commands for driving the left, right and inner mirrors, whereas, through the driver elements 7, said microprocessor will drive the electric motors 12 of said mirrors.

Each push-button or keyboard assembly comprises four push-buttons, for displacing the above mentioned rear vision mirrors upwardly, downwardly, to the right and to the left.

Moreover, by means of a mirror/steering wheel switch 13, it is also possible to adjust the position of the steering wheel, by means of the small keyboard for adjusting the mirrors.

There is moreover provided a store keyboard providing a personal memory recovery feature, and including keys or push-buttons 14 for recovering a personal preset position which position will be preliminarily stored.

In particular, in order to store a personal position, it is necessary to simultaneously press a push-button 15 together with that of the preset or preselected memory or store.

On the above mentioned store keyboard there are moreover provided a key 16 for locking the recovery possibility, as well as LED's 17.

The keyboard 18 for operating the seat comprises six keys or push-buttons, each provided for controlling a respective electric motor, adapted to bring the seat to any desired positions.

More specifically, the mentioned push-buttons, which actuate the electric motors in a direction or in the opposite direction, are specifically designed for controlling the positions of the head rest element of the seat, the inclination of the backrest thereof, as well as for adjusting the height of the seat and causing it to advance or for displacing the top cushion of the seat or the bottom cushion thereof.

In this connection it should be pointed out that each electric motor 19 for adjusting the position of the seat and the steering wheel, is driven through relays 20 including an interruption contact of a normally open type and that, in order to reverse the direction of each motor, there are used two relays 21 and 22 provided with switching contacts.

According to an advantageous feature of the invention, a further output contact 22 can be also provided, which is designed for connection with an impact sensor arranged either outside or inside the control unit 1.

The reference numbers 23, 24 and 25 show inputs for signals respectively related to the conditions of starting key engaged, an open door and speedometer.

Moreover, at the reference number 26 there is indicated a common return line for the seat motors, at 27 the regulated voltage outputs (typically of 5 V) for power supplying the analogic feedback potentiometers which are rigid with the motors, at 28 the ground outputs, and at 29 an output for an impact sensor.

In particular, with the starting key disengaged and an open door, it is possible to recover or "recall" a stored position by a simple temporary pressure on the push-button provided for this specific function.

Vice-versa, as the starting key is engaged, in order to recover the stored positions, it is necessary to hold the recovery push-button pressed for the overall duration of the driving.

The central unit according to the present invention, is moreover designed for aiding the driver during the turning and parking operations.

In fact, during the parking operations, as the reverse gear is engaged, the right rear vision mirrors will be slightly tilted downwardly, so as to allow the driver to better see the rear portion of its car and possible obstacles.

During a low speed turning operation, by switching on one of the two direction lamps, the mirror corresponding to the selected direction will be caused to slightly turn outwardly, in order to provide a better side visibility.

This position will be held for the overall time in which the direction lamp is energized, and the return of the mirror to its starting position will be suitably delayed with respect to the switching off of said direction lamp.

Moreover, it is further possible to switch off the above mentioned functions, as the driver does not consider necessary to use them.

In particular, with the vehicle running with a high speed (for example on a highway), a signal received from the speedometer input will prevent a correction of the visual angle with the direction indicator lamp in a switched on condition.

Another feature is that it provides for a complete collapsing of the outer rear vision mirrors as the door locking assembly is energized and the starting key is not engaged, since these conditions usually correspond to a parking operation.

The return to their usual positions of the rear vision mirrors will be obtained in a simple way by reengaging the starting key.

A further feature of the central control unit is that it allows to store and recover the seat positions through a wireless remote control element.

Likewise, the positions assumed during a low speed turn and/or with the rear gear engaged, can be "personalized" by the user if he/she is provided with a remore control device.

From the above disclosure it should be apparent that the invention fully achieves the intended aim and objects.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A control central unit for controlling and storing the positions of a seat, steering wheel and rear vision mirrors in a motor vehicle, characterized in that said unit comprises a control microprocessor having a permanent storing capability, said microprocessor being interfaced with: an analogic feedback buffer for the seat, an analogic feedback buffer for the rear vision mirrors, a buffer for contact means of keyboard control means of said rear vision mirrors, a buffer for contact means of memory keyboard means, a driver for driving electric motor means of said rear vision mirrors, a logic circuitry for driving, either automatically or manually, electric motor means for the seat and steering wheel, as well as a remote control interface, and a digital buffer for status signals.

2. A control central unit, according to Claim 1, characterized in that said unit further comprises keyboard assemblies for controlling said microprocessor to provide it with commands for displacing said mirrors and, through said driver elements, for controlling the electric motors of said mirrors, each keyboard assembly comprising four keys for controlling said mirrors upwardly, downwardly, to the right and to the left.

3. A control central unit, according to Claim 1, characterized in that said control central unit further comprises a mirror/steering wheel keyboard adapted to allow the position of the steering wheel to be adjusted by means of the keyboard assembly used for adjusting the mirrors.

4. A control central unit, according to Claim 1, characterized in that said unit further comprises a keyboard assembly for storing and recalling personal stored positions, this keyboard being provided with a plurality of keys for recalling a personal preset stored position.

5. A control central unit, according to Claim 4, characterized in that on said keyboard assembly there are also provided a key for locking the recalling operation as well as a plurality of light emitting diodes (LED's).

6. A control central unit, according to Claim 2, characterized in that said keyboard assembly for controlling said seat comprises six keys for controlling corresponding electric motors for driving respectively a head-rest of said seat, a backreat thereof, and for controlling the height of said seat and the advancing thereof, as well as for controlling a cushion top element and a cushion bottom element of said seat.

7. A control central unit, according to Claim 6, characterized in that each of said electric motors for controlling said seat and steering wheel is driven through relay means having a normally open interruption contact and in that, in order to reverse the direction of said electric motors there are included two relays having switching contacts.

8. A control central unit, according to Claim 1, characterized in that said unit further comprises an output contact for an impact sensor, said sensor being mounted either outside of or inside said central unit, and further comprises inputs for signals respectively indicative of a starting key engaged condition, of an open door condition and of a speedometer condition.

9. A control central unit, according to Claim 1, characterized in that it is adapted to cause a passenger side rear vision mirror to be automatically downwardly tilted in order to provide a better visibility during a rear gear operation.

10. A control central unit, according to Claim 1, characterized in that said unit is adapted to automatically cause the two outer rear vision windows to be outwardly tilted, according to a set angle, as a direction indicator lamp is energized, and being also adapted to cause said mirrors to return to their starting positions as said indicator lamp returns to its rest condition.

11. A control central unit according to Claim 1, characterized in that, at a rest condition, it is specifically designed for causing said outer rear vision mirrors to be fully collapsed during a parking operation.

FIG. 1

EP 0 505 336 A1

27

3

28

19

26

27

5

28

11

27

5

28

11'

14

15

16

17

28

1

18

13

28

27

5

28

11"

23

24

25

29

28

FIG.2

EP 0 505 336 A1

**European Patent Office**   EUROPEAN SEARCH REPORT   Application Number

EP 92 83 0134

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 609 688 (ALPS ELECTRIC CO.) | 1-7,9-11 | B60R16/02 |
| Y | * page 5, line 7 - page 6, line 3 * | 8 | |
|  | * page 6, line 11 - page 7, line 18 * | | |
|  | * page 8, line 16 - page 13, line 12 * | | |
|  | * page 14, line 7 - line 23 * | | |
|  | * page 16, line 10 - page 18, line 15 * | | |
|  | * claims 1-11; figures 1-8 * | | |
|  | --- | | |
| Y | EP-A-0 442 627 (CLIFFORD ELECTRONICS) | 8 | |
|  | * column 1, line 1 - column 3, line 50 * | | |
|  | * column 7, line 44 - column 8, line 19 * | | |
|  | * column 10, line 20 - column 11, line 53; | | |
|  | claims 1,3,4; figures 1-8 * | | |
|  | --- | | |
| A | DE-A-3 514 438 (PORSCHE) | 1-6 | |
|  | * column 5, line 65 - column 6, line 15 * | | |
|  | * column 8, line 29 - line 50; claim 1; figures 1-9 * | | |
|  | --- | | |
| A | EP-A-0 287 993 (B.M.W) | 1-6,9,10 | |
|  | * the whole document * | | **TECHNICAL FIELDS SEARCHED (Int. Cl.5)** |
|  | --- | | |
| A | PATENT ABSTRACTS OF JAPAN | 8 | |
|  | vol. 10, no. 171 (M-489)(2227) 17 June 1986 | | B60R |
|  | & JP-A-61 021 842 ( NIPPON JIDOSHA ) 30 January 1986 | | |
|  | * abstract * | | |
|  | ----- | | |

The present search report has been drawn up for all claims

| Place of search | Date of completion of the search | Examiner |
|---|---|---|
| THE HAGUE | 05 JUNE 1992 | GEYER J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7